# EUROPÄISCHE PATENTSCHRIFT

(11) **EP 1 210 841 B1**
(45) Veröffentlichungstag und Bekanntmachung des Hinweises auf die Patenterteilung: **03.08.2011**
(21) Anmeldenummer: 00965837.8
(22) Anmeldetag: 06.09.2000
(51) Int. Cl.: H04M 3/51

(54) **VERFAHREN ZUR REALISIERUNG EINES RÜCKRUF-DIENSTES IN EINEM MOBILFUNKNETZ**
METHOD FOR IMPLEMENTING A CALL-BACK SERVICE IN A MOBILE RADIO NETWORK
PROCEDE DE MISE EN OEUVRE D'UN SERVICE DE RAPPEL DANS UN RESEAU DE TELECOMMUNICATION MOBILE

(30) Priorität: 09.09.1999 DE 19943173
(43) Veröffentlichungstag der Anmeldung: 05.06.2002
(73) Patentinhaber: Nokia Siemens Networks GmbH & Co. KG, 81541 München (DE)
(72) Erfinder: VAN BALLAER, Bart, 13629 Berlin (DE); BERG, Andreas, 10585 Berlin (DE); MONEKE, Klaus, 14089 Berlin (DE)
(86) Internationale Anmeldenummer: PCT/DE2000/003079
(87) Internationale Veröffentlichungsnummer: WO 2001/019109

(56) Entgegenhaltungen:
- WO-A-99/05876
- WO-A-99/17567
- US-A- 5 924 035

## Beschreibung

### Fachgebiet der Erfindung

Systeme zur mobilen Kommunikations haben in den letzten Jahren zunehmend an Bedeutung gewonnen. Durch die Einführung von Standards wie GSM (Global System for Mobile Communication) wird deren Verbreitung gefördert und eine Kommunikation auch außerhalb der eigenen Länder- und Netzbetreibergrenzen ist inzwischen möglich.

Bei einem im Ausland begonnen Telefonat verdient der Netzbetreiber des besuchten Netzes (VPLMN) derzeit üblicherweise 70% der vom Netzteilnehmer bezahlten Gebühren, während der Betreiber des Heimatnetzes (HPLMN) nur 30% erhält.

### Stand der Technik

Dem Kunden von Telekommunikationsnetzen, insbesondere den Mobilfunknetzen werden bereits eine Vielzahl von Telekommunikationsdiensten angeboten.

Um neue Dienste schnell und möglichst Hersteller- und Netzbetreiberunabhängig anzubieten, wobei die bereits bestehende Infrastruktur miteinbezogen wird, ist das Konzept des Intelligenten Netzes entwickelt worden. Innerhalb der ITU wurde ein standardisiertes Konzept ausgearbeitet (siehe Normen Q.1200 ff), welches die IN Architektur definiert.

In einer Weiterentwicklung entstand CAMEL (Customized Application for Mobile Network Enhanced Logic, siehe auch GSM 02.78), in welchem IN Features in die GSM Architektur eingeführt wurden. Durch CAMEL wird das "Roaming" international und zwischen verschiedenen Betreibernetzen vereinfacht und ein einheitliches Protokoll geschaffen für den Zugriff auf CAMEL-Server in fremden GSM-Netzen..

Druckschrift WO-A-99/05876 beschreibt ein Verfahren für einen "Rückrufdienst", bei dem sich der nicht erreichbare, da derzeit belegte ("busy") angerufene Teilnehmer (MS) in einem Mobilfunknetz befindet. Der Dienst versucht dann periodisch, die angeforderte Verbindung zu dem Mobiltelefon (MS) aufzubauen solange bis der Rufaufbau erfolgreich gelingt.

Aufgabe der Erfindung ist es, eine Lösung anzugeben für das oben genannte Problem bei internationalem oder inter-provider Roaming.

Aufgabe der Erfindung ist es weiterhin, einen Rückruf-Dienst in einem Mobilfunknetz zu realisieren.

### Darstellung der Erfindung

Diese Aufgabe wird gelöst durch ein Verfahren gemäß Patentanspruch 1.

Der erfindungsgemäße Rückruf-Dienst für roamende Mobilfunkteilnehmer erlaubt es PLMN Betreibern, die Vorteile eines Call Back Services zu nutzen.

Der Rückruf-Dienst ("*USSD Call Back Service*") UCB stellt die gewünschte Funktionalität zur Verfügung:
- Analyse eines eingehenden USSD Strings,
- Analyse von A-Party und B-Party,
- Rufaufbau zur A-Party,
- Rufaufbau zur B-Party.

Der IN Dienst UCB wird mittels "USSD String" aus dem besuchten Netz VPLMN getriggert. Ist der roamende Teilnehmer kein IN Kunde, leitet das HLR den USSD String an einen Standard

SCP weiter, der UCB unterstützt; ist er IN Kunde, findet sich die korrekt SCP Adresse in der "*CAMEL Subscriber Information*" CSI.

Mit einem Rückruf-Dienst kann das Gebühren-Verhältnis zu Gunsten des HPLMN Betreibers des Heimatnetzes umgekehrt werden: Da das Gespräch vom HPLMN aufgebaut wird, erhält nun der HPLMN Betreiber den größeren Anteil der Gebühren.

Vorteilhafte Ausgestaltungen und Weiterbildungen sind in den Unteransprüchen angegeben.

Das Interworking des neuartigen Rückruf-Dienstes "*USSD Call Back Service*" UCB mit anderen IN Diensten soll ebenfalls beschrieben werden. Die Besonderheit hierbei ist, dass UCB es roamenden Teilnehmern Telefonieren über IN ermöglicht, auch wenn das besuchte Netz (VPLMN) das CAMEL Protokoll nicht unterstützt.

Der Dienst UCB steht somit roamenden IN Kunden zur Verfügung, die auch ohne CAMEL ihren subskrierten Dienst nutzen können. D.h. in VPLMNs, die CAMEL unterstützen, nutzen roamende Teilnehmer CAMEL, in Ländern ohne CAMEL-Unterstützung kommt die USSD Lösung zur Anwendung.

Weiterhin können auch nicht-IN Kunden UCB nutzen.

Interworking zwischen mehreren IN Diensten auf einem SCP ist ein weiteres Problem. Der IN Dienst UCB löst dieses Problem durch geschicktes Setzen der "Called Party Address" CdPA und "Calling Party Address" CgPA.

### Kurzbeschreibung der Zeichungen

Im folgenden wird die Erfindung anhand von Ausführungsbeispielen erläutert. Dabei zeigen
Figur 1 die Aktivierung des UCB Dienstes im SCP,
Figur 2 den Aufbau der erfindungsgemäßen "Call Back" Verbindung, und
Figur 3 das Interworking mit einem Telekommunikationsnetz, welches CAMEL nicht unterstützt.

### Beschreibung der bevorzugten Ausgestaltungsformen

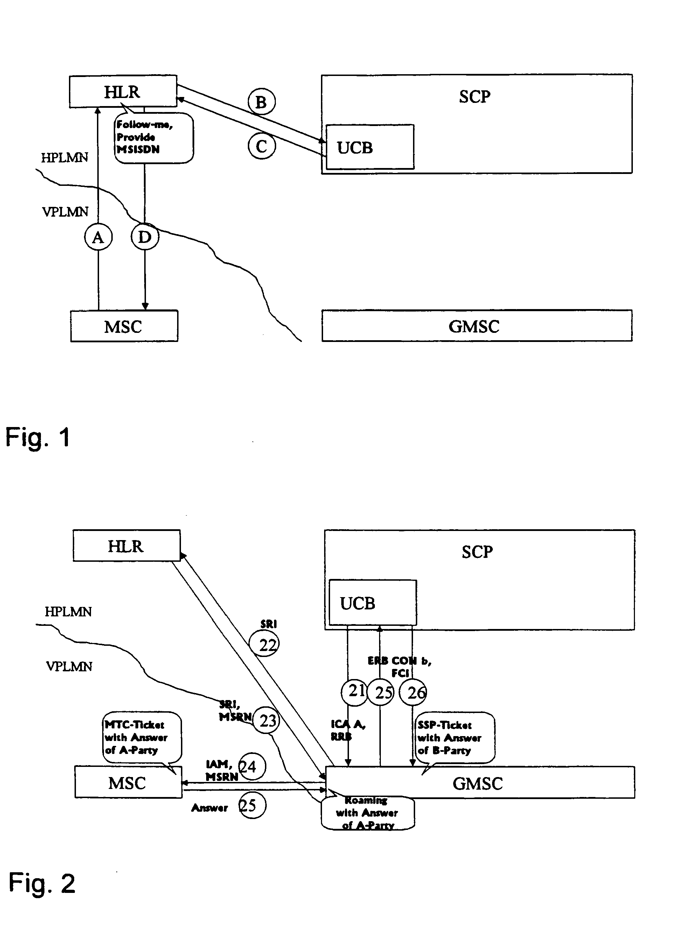

Figur 1 zeigt, wie der Rückruf-Dienst UCB durch einen eingehenden USSD (Unstructured Supplementary Service Data) String getriggert wird, den der roamende Mobilfunkteilnehmer über die Mobilvermittlungsstelle MSC im besuchten Netz VPLMN absetzt, A.

Normalerweise ist ein "USSD String" für das Heimatregister HLR bestimmt, in dem der Teilnehmer administriert ist. Anhand der USSD String Steuerinformation (*header*) wird hier jedoch die in Siemens HLRs verfügbare Funktionalität "*Follow-Me*" (SR7) getriggert. Sie erweitert einerseits den USSD String um die MSISDN (Mobile Subscriber ISDN Number) des Teilnehmers (A-Party) und leitet ihn dann an eine Dienstezentrale SCP weiter, der den Rückruf-Dienst UCB unterstützt (B). Der SCP startet den IN Dienst UCB. Dieser wiederum sendet der A-Party einen USSD String zurück, der den Eingang bestätigt, C, D.

Der IN Dienst UCB baut zuerst einen Verbindung zur A-Party mittels "InitiateCallAttempt" ICA auf, siehe Figur 2. Calling Party CgPA ist jetzt die eigentlich gewählte Called Party CdPA (B-Party) und CdPA ist die ursprüngliche CgPA (MSISDN der A-Party); gleichzeitig werden alle "*Event Detection* Points" EDP mit "*RequestReportBCSMEvent*" RRB armiert, 21, und dann mit "*Continue*" CUE fortgefahren.

Eine Gateway Mobilvermittlungsstelle GMSC interrogiert das Teilnehmerregister HLR des Teilnehmers GSM standardgemäß mit der "*SendRoutingInformation*" SRI, 22, 23. über eine IAM wird die Verbindung zur roamenden A-Party aufgebaut, 24. Mittels "*EventReportBCSM*" ERB erhält der Dienst UBC die Information, ob die A-Party geantwortet hat (*answer*), besetzt ist (*busy*), nicht antwortet (*no_answer*) oder nicht erreichbar ist (*not reachable*), 25.

Im Fall von "*answer*", reagiert UCB mit "*FurnishCharging-Information*" FCI, so dass in der GMSC ein IN Gebühren (AMA) Ticket geschrieben wird, und der Operation "*Connect*" CON, die die Verbindung zur ursprünglich gewünschten B-Party herstellt, 26.

In allen anderen Ereignisse (*busy, no_answer*, *not-reachable*) wird der IN Dialog mit "*ReleaseCall*" RL geordnet beendet. Die Armierung der EDPs außer "*answer*" ist nicht unbedingt notwendig: Ist "*not reachable*" z. B. nicht armiert, so erfährt der SCP nichts von diesem Ereignis. Die GMSC löst für sich den Ruf aus und der SCP reagiert ebenso, wenn er innerhalb einer bestimmten Zeit keine Information erhält.

Die Vergebührung ist des Szenrios ist sichergestellt: Die GMSC erstellt mit "*answer*" von A ein "*Roaming Ticket*", in das die Answer-Zeit eingetragen wird. In der VMSC der A-Party wird ein "*MTC Ticket*" geschrieben, und der SSP schreibt auf Grund der FCI Operation ein "*IN AMA Ticket*".

UCB unterscheidet anhand "GetUserRecord", ob und welchen IN Dienst die A-Party subskribiert hat. Hat die A-Party keine IN Subskription, verfährt UCB, wie oben beschrieben.

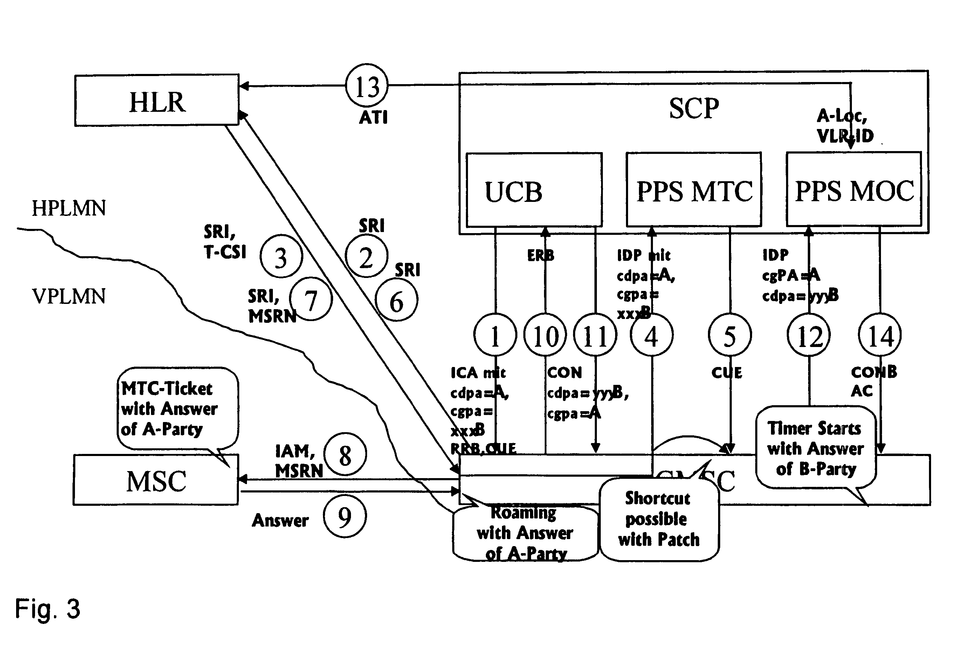

Hat die A-Party eine IN Subskription, erweitert UCB die CgPA in der "InitiateCallAttempt" ICA um eine administrierbare Anzahl von administrierbaren Ziffern XXX, die auch hexadezimale Digits enthalten können (in der Figur 3 beispielhaft dargestellt der subskribierter IN Dienst: Prepaid Service), 1. Die anschließende Interrogation des HLRs, 2 und 3, liefert möglicherweise eine T-CSI.

Da der MTC IN Dialog nicht erwünscht ist - die roamende A-Party möchte eigentlich einen abgehenden Ruf (Mobile Originating Call) MOC absetzen - muss dieser entweder mittels SDDPFC unterdrückt werden oder in der EntryFSL oder (Mobile Terminating Call) MTC Dienste-Logik auf Grund des XXX Codes in der CgPA, 4 und 5. Die zweite Interrogation des Teilnehmerregisters HLR (zweiter Schritt der zweistufigen Interrogation!) liefert die MSRN, 6 und 7, die die Verbindung zur A-Party ermöglicht, 8.

Sobald die A-Party antwortet, 9, wird dies dem UCB über ERB mitgeteilt, 10. Daraufhin fährt UCB mit der Operation "*Connect*" CON fort, die als Calling Party CgPA die MSISDN der A-Party enthält und als Called Party CdPA die um eine administrierbare Anzahl von administrierbaren Ziffern YYY (hexadezimale Digits möglich) erweiterte ursprünglich gewählte Nummer der B-Party, 11. Auf YYY ist am SSP ein Codepunkt einzurichten, der über eine IDP (Initial Detection Point), 12 den gewünschten IN Dienst am 'richtigen' SCP triggert (YYY ist also IN Service spezifisch einzurichten).

Da der SCP keinerlei Information über den Aufenthaltsort A-Location der A-Party besitzt, muss die Dienstelogik EntryFSL oder die MOC IN Service Logik über die "*AnyTimeInterrogation*" ATI die A-Location ermitteln, 13. Anschließend läuft die MOC Service Logik ab, als ob sie direkt über eine CAP:IDP gestartet worden wäre. Im dargestellten Fall fährt PPS mit "*ApplyCharging*" AC und "*Connect*" CON B-Party fort.

Sollte die A-Party nicht erreichbar sein (*busy*, *no_answer*, *not_reachable*), ist optional zu verfahren, wie weiter oben beschrieben

### Abkürzungsverzeichnis

- AMA: Automatic Message Accounting
- CAMEL: Customized Applications For Mobile Network Enhanced Logic (GSM 02.78)
- CAP: CAMEL Application Part
- CdPA: Called Party
- CgPA: Calling Party
- CON: Connect
- CSI: CAMEL Subscriber Information
- CUE: Continue
- EDP: Event Detection Point
- FCI: Furnish Charging Information
- FSL: Flexible Service Logic
- GMSC: Gateway Mobile Services Switching Centre
- GSM: Global System for Mobile Communication
- HLR: Home Location Register (Teilnehmerverzeichnis)
- HPLMN: Home Public Land Mobile Network (Heimatnetz)
- ICA: InitiateCallAttempt
- IN: Intelligent Network (Intelligentes Netz)
- MOC: Mobile Originating Call
- MSC: Mobile Switching Center (Vermittlungsstelle im Mobilfunknetz)
- MSISDN: Mobile Subscriber ISDN Number
- MSRN: Mobile Station Roaming Number
- MTC: Mobile Terminating Call
- PPS: Prepaid Service
- SCP: Service Control Point (Dienstezentrale)
- SRI: Send Routing Information
- VPLMN: Visited Public Land Mobile Network (besuchtes Netz)
- UCB: USSD CallBack Service (Rückruf-Dienst)
- USSD: Unstructured Supplementary Service Data

## Patentansprüche

1. Verfahren zur Realisierung eines Rückrufdienstes in einem Mobilfunknetz, enthaltend
- eine Dienstezentrale (SCP),
- eine erste Vermittlungsstelle (MSC) in einem ersten Teilnetz (VPLMN),
- eine zweite Vermittlungsstelle (GMSC) in einem zweiten Teilnetz (HPLMN)
- ein Teilnehmerverzeichnis (HLR)
wobei ein Dienstaufruf (A) von einem Anrufer (A-Party) über die erste Vermittlungsstelle (MSC) aus dem ersten Teilnetz (VPLMN) an das Teilnehmerregister (HLR) übertragen wird und
von diesem an die Dienstezentrale (SCP) weitergeleitet wird, und
der Dienstaufruf von der Dienstezentrale analysiert wird, insbesondere die Informationen zu Anrufer (A-Party) und Angerufenem (B-Party), und
eine Verbindung zwischen Anrufer und Angerufenem aufgebaut wird, indem von dem Dienst
- in einem ersten Schritt ein erster Rufaufbau initiiert wird zurück zum Anrufer (A-Party, 24, 8), und
- bei erfolgreichem ersten Rufaufbau zum Anrufer in einem zweiten Schritt ein zweiter Rufaufbau initiiert wird zum Angerufenen (B-Party).

2. Verfahren nach Patentanspruch 1,
**dadurch gekennzeichnet, dass**
der erste und der zweite Rufaufbau von der zweiten Vermittlungsstelle (GMSC) initiiert werden.

3. Verfahren nach nach Patentanspruch 2,
**dadurch gekennzeichnet, dass**
die Dienstezentrale ein Verbindungsaufbauaufforderung (ICA) an die zweite Vermittlungsstelle (GMSC) sendet.

4. Verfahren nach einem der vorherigen Patentansprüche, **dadurch gekennzeichnet, dass**
eine Funktionalität im Teilnehmerregister (HLR) durch Steuerinformationen in dem Dienstaufruf gestartet wird.

5. Verfahren nach Patentanspruch 4,
**dadurch gekennzeichnet, dass**
der Dienstaufruf (USSD String) von dem HLR durch die Rufnummer (MSISDN) des Anrufenden ergänzt wird, bevor er an die Dienstezentrale weitergeleitet wird.

6. Verfahren nach einem der vorigen Patentansprüche,
**dadurch gekennzeichnet, dass**
der Eingang des Dienstaufrufes von der Dienstezentrale (SCP) an die A-Party (MSC) bestätigt wird (C, D).

7. Verfahren nach einem der vorigen Patentansprüche,
**dadurch gekennzeichnet, dass**
bei erfolgreichem Rufaufbau ("answer", 15) von der zweiten Vermittlungsstelle GMSC Gebühreninformation (AMA Ticket) erzeugt wird.

8. Verfahren nach einem der Patentansprüche 1 bis 5,
**dadurch gekennzeichnet, dass**
bei nicht erfolgreichem Rufaufbauversuch (no_anwer, 15) der IN Dienstaufruf von dem Dienst (UCB) geordnet beendet wird (ReleaseCall).

9. Verfahren nach einem der vorigen Patentansprüche,
**dadurch gekennzeichnet, dass**
der Teilnehmer einen weiteren IN-Dienst subskribiert hat (PPS), und
die Dienstezentrale ein Verbindungsaufbauaufforderung (ICA) an die zweite Vermittlungsstelle (GMSC) sendet, wobei diese Verbindungsaufbauaufforderung um eine Kennung des subskribierten Dienstes (XXX) ergänzt wird.

10. Verfahren nach einem der vorigen Patentansprüche,
**dadurch gekennzeichnet, dass**
bezüglich des ursprünglich eingehenden Rufes MTC entstehende IN Dialoge bei der Dienstezentrale (SCP) unterdrückt werden.

11. Verfahren nach einem der Patentansprüche 9 oder 10,
**dadurch gekennzeichnet, dass**
nach dem erfolgreichem Verbindungsaufbau ("answer", 9) zum Anrufenden ein Verbindungsaufbau zum Angerufenen angefordert wird,
wobei die ursprünglich gewählte Nummer um eine Kennung der für den weiteren IN-Dienst (PPS) zuständigen Dienstezentrale (SCP) ergänzt wird (YYY).

## Claims

1. Method for implementing a call back service in a mobile radio network containing
- a service control point (SCP),
- a first mobile switching center (MSC) in a first subnetwork (VPLMN),
- a second mobile switching center (GMSC) in a second subnetwork (HPLMN)
- a home location register (HLR)
in which a service call (A) is transmitted from a caller (A party) via the first mobile switching center (MSC) from the first subnetwork (VPLMN) to the home location register (HLR) and
is forwarded by the latter to the service control point (SCP), and
the service call is analysed by the service control point, especially the information relating to caller (A party) and called party (B party), and
a connection is set up between caller and called party by virtue of the service
- initiating in a first step a first call set-up back to the caller (A party, 24, 8), and
- in the event of the first call set-up to the caller being successful, initiating in a second step a second call set-up to the called party (B party).

2. Method according to Claim 1, **characterized in that** the first and the second call set-up are initiated by the second switching centre (GMSC).

3. Method according to Claim 2, **characterized in that** the service control point sends a connection set-up request (ICA) to the second switching center (GMSC).

4. Method according to one of the preceding claims, **characterized in that**
a function in the home location register (HLR) is started by the header in the service call.

5. Method according to Claim 4, **characterized in that** the service call (USSD string) is supplemented by the call number (MSISDN) of the calling party by the HLR before it is forwarded to the service control point.

6. Method according to one of the preceding claims, **characterized in that** the receipt of the service call is acknowledged to the A party (MSC) by the service control point (SCP) (C, D).

7. Method according to one of the preceding claims, **characterized in that** in the case of a successful call set-up ("answer", 15), the second switching center GMSC generates charging information (AMA Ticket).

8. Method according to one of Claims 1 to 5, **characterized in that** in the case of an unsuccessful call set-up attempt (no_answer, 15), the IN service call is ended in an ordered manner by the service (UCB) (ReleaseCall).

9. Method according to one of the preceding claims, **characterized in that** the subscriber has subscribed to a further IN service (PPS) and the service control point sends a connection set-up request (ICA) to the second switching center (GMSC), this connection set-up request being supplemented by an identity of the subscribed service (XXX).

10. Method according to one of the preceding claims, **characterized in that**
IN dialogues produced with respect to the call originally received MTC are suppressed at the service control point (SCP).

11. Method according to one of Claims 9 or 10, **characterized in that** after the successful connection set-up ("answer", 9) to the calling party, a connection set-up to the called party is requested, the number originally dialled being supplemented by an identity of the service control point (SCP) responsible for the further IN service (PPS) (YYY).

## Revendications

1. Procédé de réalisation d'un service de rappel dans un réseau radio mobile qui comporte :
- une centrale de services (SCP) ;
- un premier centre de commutation (MSC) dans un premier réseau partiel (VPLMN) ;
- un deuxième centre de commutation (GMSC) dans un deuxième réseau partiel (HPLMN) ;
- un répertoire d'usagers (HLR),
une demande de service (A) étant transmise d'un appelant (A-Party) au registre d'usagers (HLR) via le premier centre de commutation (MSC) à partir du premier réseau partiel (VPLMN) et
étant retransmise dudit registre à la centrale de services (SCP), et
la demande de service étant analysée par la centrale de services, en particulier les informations sur l'appelant (A-Party) et l'appelé (B-Party), et
une liaison étant établie entre l'appelant et l'appelé par
- initialisation par le service, dans une première étape, d'un premier établissement d'appel retour vers l'appelant (A-Party, 24, 8) et
- initialisation par le service, dans une deuxième étape, d'un deuxième établissement d'appel vers l'appelé (B-Party) si le premier établissement d'appel vers l'appelant a réussi.

2. Procédé selon la revendication 1, **caractérisé en ce que** le premier et le deuxième établissements de liaison sont initialisés par le deuxième centre de commutation (GMSC).

3. Procédé selon la revendication 2, **caractérisé en ce que** la centrale de services envoie au deuxième centre de commutation (GMSC) une invitation à établir une liaison (ICA).

4. Procédé selon l'une des revendications précédentes, **caractérisé en ce qu'**une fonctionnalité est lancée dans le registre d'usagers (HLR) par des informations de commande contenues dans la demande de service.

5. Procédé selon la revendication 4, **caractérisé en ce que** la demande de service (USSD String) est complétée par le HLR avec le numéro d'appel (MSISDN) de l'appelant avant d'être retransmise à la centrale de services.

6. Procédé selon l'une des revendications précédentes, **caractérisé en ce que** l'entrée de la demande de service est confirmée (C, D) par la centrale de services (SCP) à A-Party (MSC).

7. Procédé selon l'une des revendications précédentes, **caractérisé en ce que**, si l'établissement d'appel est réussi (« answer », 15), une information de frais (AMA Ticket) est générée par le deuxième centre de commutation (GMSC).

8. Procédé selon l'une des revendications 1 à 5, **caractérisé en ce que**, si la tentative d'établissement d'appel a échoué (no_answer, 15), la demande de service IN est terminée (ReleaseCall) sur ordre du service (UCB).

9. Procédé selon l'une des revendications précédentes, **caractérisé en ce que** :
- l'usager a souscrit un autre service IN (PPS) ; et
- la centrale de services envoie au deuxième centre de commutation (GMSC) une invitation à établir une liaison (ICA), cette invitation à établir une liaison étant complétée par un identifiant du service souscrit (XXX).

10. Procédé selon l'une des revendications précédentes, **caractérisé en ce que** des dialogues IN qui s'établissent concernant l'appel entrant initialement MTC sont supprimés au niveau de la centrale de services (SCP).

11. Procédé selon l'une des revendications 9 ou 10, **caractérisé en ce que**, après l'établissement de liaison réussi avec l'appelant (« answer », 9), un établissement de liaison avec l'appelé est demandé, le numéro composé initialement étant complété (YYY) par un identifiant de la centrale de services (SCP) compétente pour l'autre service IN (PPS).
